# EUROPÄISCHE PATENTSCHRIFT

(11) **EP 3 651 922 B1**
(45) Veröffentlichungstag und Bekanntmachung des Hinweises auf die Patenterteilung: **10.09.2025**
(21) Anmeldenummer: 18755707.9
(22) Anmeldetag: 12.07.2018
(51) Int. Cl.: B23B 29/32

(54) **WERKZEUGWECHSELVORRICHTUNG, WERKZEUGMASCHINE MIT EINER SOLCHEN WERKZEUGWECHSELVORRICHTUNG UND ZUGEHÖRIGES VERFAHREN**
TOOL-CHANGING DEVICE, MACHINE TOOL HAVING SUCH A TOOL-CHANGING DEVICE, AND ASSOCIATED METHOD
DISPOSITIF CHANGEUR D'OUTIL, MACHINE-OUTIL POURVUE D'UN TEL DISPOSITIF CHANGEUR D'OUTIL ET PROCÉDÉ ASSOCIÉ

(30) Priorität: 14.07.2017 DE 102017115951
(43) Veröffentlichungstag der Anmeldung: 20.05.2020
(73) Patentinhaber: J.G. Weisser Söhne GmbH & Co. KG, 78112 St. Georgen (DE)
(72) Erfinder: FEHRENBACHER, Florian, 78730 Lauterbach-Sulzbach (DE); RETTICH, Thorsten, 78126Königsfeld (DE); JÖRG, Reiner, 78144 Schramberg (Tennenbronn) (DE)
(74) Vertreter: Mertzlufft-Paufler, Cornelius
(86) Internationale Anmeldenummer: PCT/EP2018/068991
(87) Internationale Veröffentlichungsnummer: WO 2019/012059

(56) Entgegenhaltungen:
- DE-A1- 1 402 926
- GB-A- 101 696
- GB-A- 173 967
- US-A- 1 406 339
- US-A- 3 371 566

## Beschreibung

Die Erfindung betrifft eine Werkzeugwechselvorrichtung mit wenigstens zwei Werkzeugaufnahmen zur Aufnahme jeweils eines Werkzeugs und mit einer Antriebsvorrichtung, mit der die Werkzeugaufnahmen relativ zu einem Gestell einer Werkzeugmaschine und/oder einem der Werkzeugwechselvorrichtung in eine Arbeitsposition bewegbar sind.

Die Erfindung betrifft ferner eine Werkzeugmaschine mit einer derartigen Werkzeugwechselvorrichtung und ein Verfahren zum Wechseln von Werkzeugen an einer Werkzeugmaschine unter Verwendung einer Werkzeugwechselvorrichtung.

Derartige Werkzeugwechselvorrichtungen, Werkzeugmaschinen und auch Verfahren zum Wechseln von Werkzeugen sind aus dem Stand der Technik in unterschiedlichen Ausführungsformen vorbekannt. Insbesondere bei hochpräzisen Bearbeitungen spielt dabei die Möglichkeit der Arretierung des Werkzeugs eine besondere Rolle. Bei den aus dem Stand der Technik vorbekannten Werkzeugwechselvorrichtungen werden motorisch angetriebene Antriebsvorrichtungen verwendet, mit denen sich die Werkzeugaufnahmen in die gewünschte Position verstellen lassen. Ist die gewünschte Position der Werkzeugaufnahme erreicht, wird die Werkzeugaufnahme mit Hilfe eines Arretierelements, das von einem weiteren Antrieb zugestellt wird, in der eingenommenen Position arretiert, so dass anschließend eine Bearbeitung eines Werkstücks erfolgen kann. Somit müssen sowohl eine Antriebsvorrichtung als auch eine Arretiervorrichtung bereitgehalten werden, was einen vergleichsweise großen Aufwand darstellt, weil diese Vorrichtungen jeweils über eigene Antriebe verfügen.

Aufgabe der Erfindung ist es daher, eine Werkzeugwechselvorrichtung, eine Werkzeugmaschine sowie ein Verfahren der eingangs genannten Art bereitzustellen, bei denen der Aufwand zur Positionierung der Werkzeugaufnahmen in eine Arbeitsposition und zu deren Arretierung in der Arbeitsposition reduziert werden kann.

Diese Aufgabe wird durch eine Werkzeugwechselvorrichtung der eingangs genannten Art mit den Mitteln und Merkmalen des unabhängigen, auf eine Werkzeugwechselvorrichtung gerichteten Anspruchs gelöst. Insbesondere wird zur Lösung dieser Aufgabe bei einer Werkzeugwechselvorrichtung der eingangs genannten Art vorgeschlagen, dass die Antriebsvorrichtung wenigstens ein Arretierelement und wenigstens ein zumindest mittelbar mit den wenigstens zwei Werkzeugaufnahmen verbundenes Gegenelement umfasst, wobei die Werkzeugaufnahmen durch eine relative Verstellbewegung zwischen dem Arretierelement und dem Gegenelement in eine Arbeitsposition positioniert und dort arretiert werden. Dabei sind die Werkzeugaufnahmen bei in Arretierstellung zueinander angeordnetem Arretierelement und Gegenelement arretiert.

Der Kern der Erfindung besteht somit in der Idee, die Werkzeugwechselvorrichtung derart auszugestalten, dass eine zur Arretierung der Werkzeugaufnahmen erforderliche Verstellbewegung, die von einem Arretierelement und/oder einem Gegenelement relativ zueinander ausgeführt wird, zur Positionierung der Werkzeugaufnahmen in eine Arbeitsposition genutzt wird. Mit anderen Worten ist die Werkzeugwechselvorrichtung somit dazu eingerichtet, durch das Arretieren ein Positionieren der Werkzeugaufnahmen in die Arbeitsposition zu bewirken.

Somit kann bei der erfindungsgemäßen Werkzeugwechselvorrichtung also auf einen separaten Antrieb zur Verstellung der Werkzeugaufnahmen in ihre Arbeitsposition verzichtet werden. Dies ist günstig, da sich somit einerseits der benötigte Bauraum und andererseits der Energiebedarf zur Verstellung und Arretierung der Werkzeugaufnahmen reduzieren lassen.

Das Arretierelement und das Gegenelement können derart vorzugsweise mechanisch zusammenwirken, dass eine relativ zu dem Gegenelement ausgeführte Verstellbewegung des Arretierelements in seine Arretierstellung in eine Positionierbewegung des Gegenelements umwandelbar ist. Durch diese Positionierbewegung können die Werkzeugaufnahmen in die Arbeitsposition gelangen und mithilfe des schließlich in Arretierstellung an dem Gegenelement befindlichen Arretierelements festgelegt werden. Hierbei kann das Gegenelement als Kraftübertragungselement dienen, über das die Antriebskraft des Arretierelements zur Positionierung der Werkzeugaufnahmen in die Arbeitsposition auf diese übertragen werden kann.

Es ist aber auch möglich, dass das Arretierelement und das Gegenelement derart, vorzugsweise mechanisch, zusammenwirken, dass eine relativ zu dem Arretierelement ausgeführte Verstellbewegung des Gegenelements in eine Arretierstellung an dem Arretierelement in eine Positionierbewegung des Gegenelements umwandelbar ist, durch die die Werkzeugaufnahmen in eine Arbeitsposition positionierbar sind.

Bevorzugt können das Arretierelement und das Gegenelement derart mechanisch zusammenwirken, dass eine lineare Verstellung des Arretierelements oder des Gegenelements eine rotatorische Positionierbewegung des Gegenelements bewirkt. Die lineare Verstellung des Arretierelements erfolgt dabei durch eine relativ zu dem Gegenelement ausgeführte Verstellbewegung des Arretierelements in die Arretierstellung. Die lineare Verstellung des Gegenelements erfolgt durch eine relativ zu dem Arretierelement ausgeführte Verstellbewegung des Gegenelements in die Arretierstellung. Die rotatorische Positionierbewegung des Gegenelements kann in eine zu der Arbeitsposition korrespondierende Stellung erfolgen. Auf diese Weise kann die Werkzeugwechselvorrichtung zum Beispiel bei Werkzeugrevolvern an Werkzeugmaschinen eingesetzt werden. In diesem Zusammenhang kann es vorteilhaft sein, wenn das Gegenelement drehbar an dem Grundkörper der Werkzeugwechselvorrichtung gelagert ist.

Die mit dem Arretierelement auf die wenigstens zwei Werkzeugaufnahmen und/oder auf einen Werkzeugkopf, an dem die wenigstens zwei Werkzeugaufnahmen ausgebildet sein können, übertragbare Positionierbewegung kann eine Linearbewegung oder eine rotatorische Bewegung sein. Eine rotatorische Positionierbewegung kann um eine Rotationsachse des Werkzeugkopfes erfolgen. Dabei können die Werkzeugaufnahmen entlang einer um die Rotationsachse geschlossenen Bahn umlaufen.

Eine mit dem Arretierelement zur Verstellung ausführbare Verstellbewegung kann vorzugsweise eine lineare, gegebenenfalls aber auch eine rotatorische Bewegung sein.

Die Umwandlung der Verstellbewegung des Arretierelements in eine Positionierbewegung der Werkzeugaufnahmen lässt sich auf konstruktiv vergleichsweise einfache Weise erzielen, wenn das wenigstens eine Gegenelement ein zu dem wenigstens einen Arretierelement korrespondierend ausgebildetes Zahnprofil oder Klauenprofil aufweist. Das Zahnprofil oder das Klauenprofil können derart korrespondierend zu dem Arretierelement ausgebildet sein, sodass ein Eingreifen des Arretierelements in das Zahnprofil oder in das Klauenprofil des Gegenelements eine Rotation des Gegenelements bewirkt.

Die Umsetzung der Verstellbewegung des Arretierelements in eine Rotation des Gegenelements kann weitgehend verlustfrei erfolgen, wenn das Gegenelement dabei in axialer Richtung ortsfest verbleibt, also durch eine Zustellung des Arretierelements axial nicht verschoben, sondern nur gedreht wird. Somit bilden das Arretierelement und das Gegenelement eine Art Getriebestufe, mit der sich eine erste Bewegung, die Verstellbewegung, in eine zweite Bewegung, die Positionierbewegung, umwandeln lässt. Zudem wird das Gegenelement mittels dieser Getriebestufe arretiert, wenn zumindest eine der Werkzeugaufnahmen ihre Arbeitsposition und das Arretierelement seine Arretierstellung eingenommen haben.

Besonders bevorzugt weisen das Arretierelement und das Gegenelement korrespondierende Zahn- oder Klauenprofile auf. Die Zähne oder Klauenvorsprünge der Zahn- oder Klauenprofile sind dabei vorzugsweise gleichmäßig verteilt um eine Rotationsachse des Gegenelements angeordnet.

Die Werkzeugaufnahmen können derart mit dem Gegenelement verbunden sein, dass eine Relativbewegung zwischen den Werkzeugaufnahmen und dem Gegenelement unterbunden und damit ausgeschlossen ist. Mit anderen Worten kann gesagt werden, dass die Werkzeugaufnahmen und das Gegenelement drehfest miteinander verbunden sein können. Auf diese Weise lässt sich eine mit dem Arretierelement verursachte Bewegung des Gegenelements zuverlässig auf die Werkzeugaufnahmen übertragen.

Die Werkzeugwechselvorrichtung kann einen Werkzeugkopf aufweisen. An diesem Werkzeugkopf können die wenigstens zwei Werkzeugaufnahmen angeordnet oder ausgebildet sein. Ferner ist es möglich, den Werkzeugkopf relativ zu dem Gestell und/oder zu dem Grundkörper der Werkzeugwechselvorrichtung zu bewegen, insbesondere zu rotieren.

Bei einer Ausführungsform der Werkzeugwechselvorrichtung kann vorgesehen sein, dass das Arretierelement an dem Gestell oder dem Grundkörper und das Gegenelement an einem, beispielsweise dem bereits zuvor erwähnten, bewegbaren Werkzeugkopf angeordnet sind. Es ist auch möglich, dass das Arretierelement an einem, beispielsweise dem bereits zuvor erwähnten bewegbaren Werkzeugkopf und das Gegenelement an dem Gestell angeordnet sind.

Bei einer besonders bevorzugten Ausführungsform der Werkzeugwechselvorrichtung ist vorgesehen, dass das Arretierelement als axial fixiertes, vorzugsweise relativ zu dem Grundkörper der Werkzeugwechselvorrichtung drehfestes oder nicht drehbares, Klauenelement und das Gegenelement als drehbares, in Bezug auf seine Rotationsachse axial verschiebliches Gegenklauenelement ausgebildet sind. Sowohl das Arretierelement als auch das Gegenelement weisen dann jeweils wenigstens eine zu der Rotationsachse des Gegenelements schrägstehende Klauenflanke aufweisen. Die Klauenflanken der beiden Klauenelemente sind korrespondierend zueinander ausgebildet und können zur Rotationsachse des Gegenelements schrägstehende Eingriffsflächen aufweisen, sodass durch eine Verstellung des Gegenelements in seine Arretierstellung an dem Arretierelement eine Antriebskraft über die Klauenflanken und ihre Eingriffsflächen auf das Gegenelement übertragen werden kann.

Das als Klauenelement ausgebildete Arretierelement und das als Gegenklauenelement ausgebildete Gegenelement bilden in Arretierstellung eine Art Klauenkupplung.

Ferner kann es vorteilhaft kann es sein, wenn die Werkzeugwechselvorrichtung eine Stellvorrichtung aufweist. Mit einer solchen Stellvorrichtung kann eine Stellkraft, zumindest mittelbar, vorzugsweise über das Gegenelement, auf die Werkzeugaufnahmen übertragen werden. Die Stellkraft lässt sich auch auf einen Werkzeugkopf, insbesondere auf einen solchen der zuvor beschriebenen Art, übertragen, an dem die Werkzeugaufnahmen ebenfalls ausgebildet sein können.

Die Stellvorrichtung kann dazu eingerichtet sein, die Werkzeugaufnahmen durch die Stellkraft automatisch aus der Arbeitsposition in eine Zwischenposition oder Ruheposition zu bewegen. Dabei kann das Gegenelement durch die Stellkraft aus einer zu der Arbeitsposition korrespondierenden Position in eine Eingriffsposition bewegt werden. Dies insbesondere dann, wenn die Stellvorrichtung auf das Gegenelement wirkt. In dieser Eingriffsposition kann das Gegenelement derart angeordnet sein, dass das Arretierelement erneut in Eingriff mit dem Gegenelement gebracht werden kann oder umgekehrt, um anschließend eine andere der wenigstens zwei Werkzeugaufnahmen mit Hilfe des Arretierelements in eine Arbeitsposition zu verstellen. Auf diese Weise wird eine Werkzeugwechselvorrichtung geschaffen, bei der das Gegenelement mithilfe der Stellvorrichtung automatisch in eine Eingriffsposition gelangt, sobald die Arretierung des Gegenelements durch das Arretierelement aufgehoben und das Gegenelement freigegeben oder nicht-arretiert ist.

Das Gegenelement kann somit automatisch aus einer Position in eine Eingriffsposition gelangen, in der keine der Werkzeugaufnahmen mehr in Arbeitsposition angeordnet ist und in der ein erneuter Eingriff und eine erneute Betätigung des Gegenelements zur Positionierung zumindest einer der Werkzeugaufnahmen in eine Arbeitsposition mit Hilfe des Arretierelements möglich ist.

Die Größe der Stellkraft kann von einer Relativposition des Arretierelements und des Gegenelements zueinander abhängen. Dabei kann die Stellkraft bei in Arretierstellung befindlichem Arretierelement in Richtung einer, beispielsweise der bereits zuvor erwähnten, Positionierbewegung der Werkzeugaufnahmen wirken. Besonders vorteilhaft kann es sein, wenn die Stellkraft dann ein Maximum annimmt, wenn das Arretierelement in seiner Arretierstellung und zumindest eine der Werkzeugaufnahmen in ihrer Arbeitsposition angeordnet sind. Auf diese Weise kann sichergestellt werden, dass das Gegenelement zusammen mit der Werkzeugaufnahme aufgrund der in Richtung der Positionierbewegung wirkenden Stellkraft mit einer ausreichenden Stellkraft weiterbewegt werden kann, sobald das Arretierelement das Gegenelement wieder freigegeben hat.

Ferner kann die Stellkraft in aufeinanderfolgenden Relativpositionen abwechselnd in Richtung und entgegen der Richtung einer Positionierbewegung der Werkzeugaufnahmen, insbesondere des Gegenelements, wirken und ausgerichtet sein. Auf diese Weise kann die Stellvorrichtung dazu genutzt werden, die automatische Positionierung oder Weiterpositionierung des Gegenelements und der Werkzeugaufnahmen relativ zu dem Arretierelements in eine bestimmte Zwischenposition oder Eingriffsposition zu bewirken. Aufgrund der in Bezug auf zwei aufeinanderfolgenden Relativpositionen einander entgegen gerichteten Stellkraftvektoren, kann die Stellvorrichtung eine Zentrierung Werkzeugaufnahmen in einer Zwischenposition und/oder des Gegenelements in einer Eingriffsposition bewirken, in der das Arretierelement in einem weiteren Betätigungsschritt erneut mit dem Gegenelement in Eingriff treten kann. Besonders bevorzugt kann die Stellkraft bei in Eingriffsposition befindlichem Gegenelement ein Minimum aufweisen. Um das Gegenelement zuverlässig in der Eingriffsposition zu halten, kann es ferner vorteilhaft sein, wenn die Stellvorrichtung zur Erzeugung einer, vorzugsweise radialen, auf das Gegenelement wirkenden Haltekraft eingerichtet ist. Diese Haltekraft kann ein Maximum annehmen, wenn das Gegenelement in einer Eingriffsposition angeordnet ist.

Die Stellvorrichtung kann zwischen dem Gestell oder einem Grundkörper der Werkzeugwechselvorrichtung und dem Gegenelement mit den wenigstens zwei Werkzeugaufnahmen angeordnet oder ausgebildet sein. Besonders bevorzugt kann die Stellvorrichtung als magnetische Stellvorrichtung ausgebildet sein. Bei einer magnetischen Stellvorrichtung mit Permanentmagneten ist eine Energieversorgung der Stellvorrichtung entbehrlich. Wenn die Stellvorrichtung als magnetische Stellvorrichtung ausgebildet ist, kann sie zur Erzeugung der Stellkraft wenigstens einen relativ zu dem Gegenelement feststehenden Magneten und wenigstens einen an dem Gegenelement angeordneten Gegenmagneten umfassen. Mit dem wenigstens einen Magneten und dem wenigstens einen Gegenmagneten lässt sich das Gegenelement in eine Eingriffsposition bringen, insbesondere dann, wenn das Arretierelement nicht mehr im Eingriff mit dem Gegenelement ist.

Bei einer besonders bevorzugten Ausführungsform der Werkzeugwechselvorrichtung kann die magnetische Stellvorrichtung mehrere, vorzugsweise vier einzelne Magnete aufweisen, die in entsprechender Polausrichtung gleichmäßig verteilt, insbesondere um eine Rotationsachse des Gegenelements, an einem Haltering angeordnet sind. Das Gegenelement kann seinerseits mit einer gleichen Anzahl entsprechend angeordneter Gegenmagnete bestückt sein. Bei in Gebrauchsstellung befindlichem Gegenelement können die Magnete und die Gegenmagnete durch eine gegenseitige Anziehung die zuvor beschriebene Stellkraft und/oder Haltekraft der Stellvorrichtung erzeugen und das Gegenelement automatisch in eine Eingriffsposition bewegen, in der es zum erneuten Eingriff des Arretierelements bereitsteht, um die Werkzeugaufnahmen erneut zu positionieren.

Besonders vorteilhaft kann es sein, wenn eine Anzahl an Magneten und eine Anzahl an Gegenmagneten einer Anzahl oder einem ganzzahligen Vielfachen einer Anzahl von einzelnen Werkzeugaufnahmen der Werkzeugwechselvorrichtung entspricht. So lässt sich das Gegenelement mithilfe der magnetischen Stellvorrichtung für jede Werkzeugaufnahme in eine eigene Eingriffsposition bewegen, in der dann beispielsweise keine Werkzeugaufnahme in einer Arbeitsposition angeordnet ist.

Als Stellvorrichtung können auch eine federbetätigte Stellvorrichtung oder eine Stellvorrichtung mit einem Kugelrastmechanismus dienen.

Zur Verstellung des Arretierelements kann die Antriebsvorrichtung einen Antrieb aufweisen. Dieser Antrieb kann vorzugsweise elektrisch, pneumatisch oder hydraulisch oder auch elektromagnetisch sein.

Besonders vorteilhaft kann es sein, wenn die Antriebsvorrichtung eine Antriebsvorrichtung einer Werkzeugmaschine zur Erzeugung eines Werkzeugvorschubs ist. Auf diese Weise kann die Antriebsvorrichtung eine Doppelfunktion übernehmen und auch die Werkzeugwechselbewegung bewirken.

Die zuvor erwähnte Aufgabe wird auch durch eine Werkzeugmaschine mit einer Werkzeugwechselvorrichtung nach einem der auf die Werkzeugwechselvorrichtung gerichteten Ansprüche gelöst.

In diesem Zusammenhang kann es vorteilhaft sein, wenn die Werkzeugmaschine eine Antriebsvorrichtung aufweist, die zur Erzeugung eines Werkzeugvorschubs und der relativen Verstellbewegung zwischen dem Arretierelement und dem Gegenelement eingerichtet ist. Ein zusätzlicher Antrieb für den Werkzeugwechselvorgang ist somit verzichtbar. Bevorzugt ist der Werkzeugvorschub mit einer Werkstückrotation synchronisiert, um beispielsweise unrunde Werkstücke herstellen zu können. Günstig ist es, wenn die Verstellbewegung und der Werkzeugvorschub parallel zueinander ausgerichtet sind, beispielsweise auf ein und derselben Geraden verlaufen.

Um zwischen einem Verstellbetrieb und einem Vorschubbetrieb umschalten zu können, kann die Werkzeugmaschine eine Arretiervorrichtung, insbesondere mit einem Arretierstößel, aufweisen. Mit dieser Arretiervorrichtung kann das Arretierelement der Werkzeugwechselvorrichtung zumindest während eines Werkzeugwechsels relativ zu einem Gestell der Werkzeugmaschine und/oder relativ zu dem Gegenelement fixierbar sein.

Zur Lösung der Aufgabe wird auch ein Verfahren zum Wechseln eines Werkzeugs unter Verwendung einer Werkzeugwechselvorrichtung, insbesondere einer solchen, nach einem der auf die Werkzeugwechselvorrichtung gerichteten Ansprüche, vorgeschlagen, bei dem eine das Werkzeug tragende Werkzeugaufnahme der Werkzeugwechselvorrichtung durch eine relative Verstellbewegung zwischen einem Arretierelement und einem Gegenelement der Werkzeugwechselvorrichtung in eine Arbeitsposition positioniert wird. Auf diese Weise kann das insbesondere bei hochpräzise arbeitenden Werkzeugmaschinen notwendige Arretierelement eine Doppelfunktion übernehmen und nicht nur die Arretierung der Werkzeugaufnahmen bewirken, sondern auch deren Positionierung in eine Arbeitsposition.

Das Arretierelement kann hierbei zur Positionierung der Werkzeugaufnahme in eine das Gegenelement arretierende Arretierstellung bewegt werden. Es ist aber auch möglich, das Gegenelement zur Positionierung der Werkzeugaufnahme in eine Arretierstellung relativ zu dem Arretierelement zu bewegen. Die Verstellbewegung kann dabei in eine Positionierbewegung des Gegenelements umgewandelt werden. Eine der Werkzeugaufnahmen kann dann in ihrer Arbeitsposition festgelegt werden oder sein, wenn das Arretierelement und/oder das Gegenelement die Arretierstellung erreichen.

Die Werkzeugaufnahme kann nach Ausrücken des Arretierelements und/oder des Gegenelements aus der Arretierstellung von der Arbeitsposition in eine Zwischenposition verstellt werden. Ferner kann das freigegebene, also nicht mehr arretierte Gegenelement von einer zu der Arbeitsposition korrespondierenden Position in eine Eingriffsposition bewegt werden, in der ein erneutes Arretieren des Gegenelements und der Werkzeugaufnahme möglich ist. Beides kann vorzugsweise automatisch erfolgen, nachdem das Arretierelement und/oder das Gegenelement aus der Arretierstellung ausgerückt ist/sind. Die automatische Verstellung der Werkzeugaufnahme und/oder des Gegenelements kann mittels einer Stellvorrichtung erfolgen. Dabei kann eine Stellvorrichtung zum Einsatz kommen, wie sie beispielsweise in einem der Ansprüche 9 bis 12 genauer beschrieben ist.

Ist die Werkzeugaufnahme in ihre Arbeitsposition bewegt, kann mit dem Werkzeug eine spanende Bearbeitung, beispielsweise eine Drehbearbeitung oder eine fräsende Bearbeitung und/oder eine Schleifbearbeitung eines Werkstücks durchgeführt werden. Dies kann - insbesondere zur Fertigung unrunder Drehteile in einer Aufspannung - synchronisiert zu einer Werkstückrotation sein. Die spannende Bearbeitung kann auch vor dem Werkzeugwechsel durchgeführt werden.

Nachstehend ist ein Ausführungsbeispiel der Erfindung anhand der Zeichnung näher beschrieben. Es zeigen in zum Teil stark schematisierter Darstellung:
- Fig. 1: eine perspektivische Ansicht einer erfindungsgemäßen Werkzeugmaschine mit einer Werkzeugwechselvorrichtung mit mehreren Werkzeugaufnahmen,
- Fig. 2: eine perspektivische Darstellung der in Figur 1 abgebildeten Werkzeugwechselvorrichtung,
- Fig. 3: eine perspektivische Darstellung der in den Figuren 1 und 2 dargestellten Werkzeugwechselvorrichtung, wobei hier ein Gegenelement der Werkzeugwechselvorrichtung mit einem Trägerteller für den in den Figuren 1 und 2 dargestellten Werkzeugkopf zu erkennen ist,
- Fig. 4: eine Seitenansicht der in den Figuren 1 bis 3 dargestellten Werkzeugwechselvorrichtung, wobei das Gegenelement mit seinem (Gegen-)Klauenprofil und das mit dem Gegenelement zusammenwirkende Arretierelement mit einem korrespondierend zu dem Klauenprofil des Gegenelements ausgebildeten Klauenprofil zu erkennen sind,
- Fig. 5: ein Querschnitt der Werkzeugwechselvorrichtung entlang der in Figur 4 mit A-A gekennzeichneten Linie,
- Fig. 6a: ein Querschnitt der Werkzeugwechselvorrichtung entlang der Linie B-B in Figur 6b mit dem in Arretierstellung befindlichen Arretierelement,
- Fig. 6b: eine zu Fig. 6a korrespondierende Seitenansicht der in den vorherigen Figuren dargestellten Werkzeugwechselvorrichtung mit in Eingriff befindlichen Klauenprofilen,
- Fig. 7a: ein Querschnitt der Werkzeugwechselvorrichtung entlang der in Figur 7b mit C-C gekennzeichneten Linie,
- Fig. 7b: die zu Figur 7a korrespondierende Seitenansicht der Werkzeugwechselvorrichtung, wobei hier das Arretierelement in seiner Ausgangsposition, in der es nicht im Eingriff mit dem Klauenprofil des Gegenelements ist, dargestellt ist,
- Fig. 8a und 8b: ein Querschnitt sowie eine Seitenansicht der in den vorherigen Figuren dargestellten Werkzeugwechselvorrichtung, wobei hier das Gegenelement aufgrund der Wirkung der Stellvorrichtung seine Eingriffsposition eingenommen hat, in der das Gegenelement relativ so zu dem Arretierelement angeordnet ist, dass das Arretierelement zur weiteren Positionierung der Werkzeugaufnahmen erneut in Eingriff mit dem Klauenprofil des Gegenelements gelangen kann,

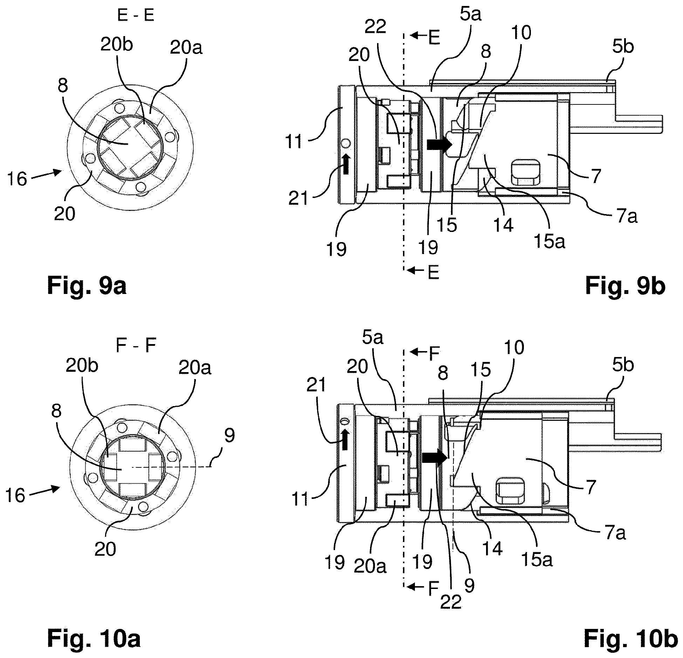

- Fig. 9a bis 10b: weitere Querschnitte und Seitenansichten der in den vorherigen Figuren dargestellten Werkzeugwechselvor- richtung, wobei in Figur 9b das Arretierelement in einer Zwischenposition auf seinem Weg in die Arretierstellung und das Gegenelement in einer korrespondierenden Zwischenposition auf seinem Weg einer der Werkzeugaufnahmen in ihre arretierte Arbeitsposition dargestellt sind, während das Gegenelement in den Figuren 10a und 10b eine zu der Arbeitsposition einer der Werkzeugaufnahmen korrespondierende Position und das Arretierelement seine Arretierposition vollständig erreicht haben, sowie
- Fig. 11 bis 16: Seitenansichten einer erfindungsgemäßen Werkzeugmaschine mit einer erfindungsgemäßen Werkzeugwechselvorrichtung zur Veranschaulichung eines Werkzeugwechselvorgangs unter Verwendung der Antriebsvorrichtung der Werkzeugmaschine.

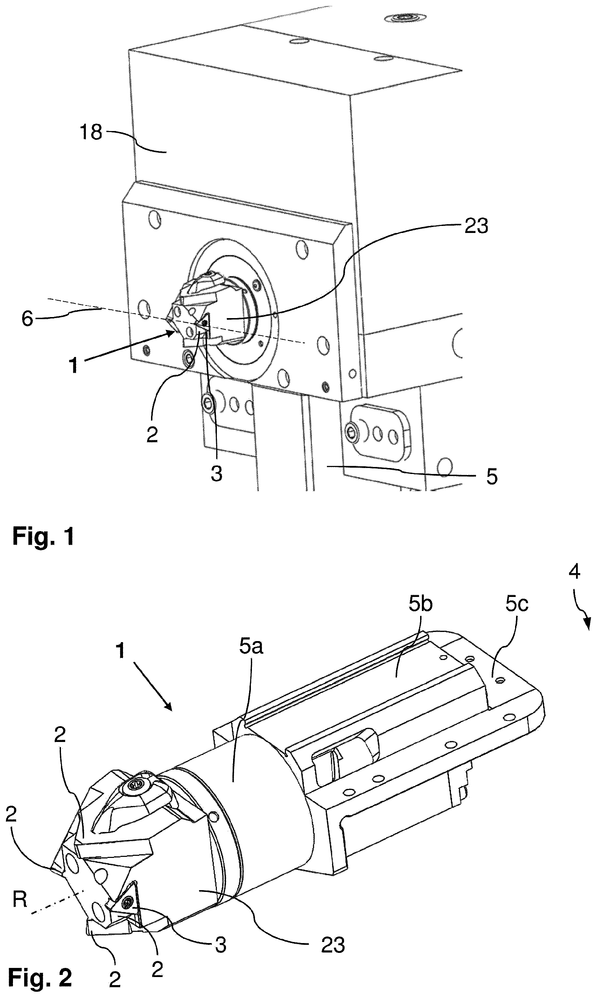

Sämtliche Figuren zeigen eine im Ganzen mit 1 bezeichnete Werkzeugwechselvorrichtung. Die Werkzeugwechselvorrichtung 1 kommt an der zumindest ausschnittsweise in Figur 1 und 11 bis 16 dargestellten Werkzeugmaschine 18 zum Einsatz. Die übrigen Figuren 2 bis 10b zeigen unterschiedliche Ansichten der Werkzeugwechselvorrichtung **1.**

Die Werkzeugwechselvorrichtung 1 ist mit einem Werkzeugkopf 23 bestückt. An dem Werkzeugkopf 23 sind insgesamt vier um 90 Grad zueinander versetzt angeordnete Werkzeugaufnahmen 2 ausgebildet. An jeder Werkzeugaufnahme 2 ist jeweils ein Werkzeug 3 angeordnet. Die Werkzeugwechselvorrichtung 1 weist eine Antriebsvorrichtung 4 auf, mit der die Werkzeugaufnahmen 2 relativ zu einem Gestell 5 der Werkzeugmaschine 18 und auch relativ zu einem Grundkörper 5a der Werkzeugwechselvorrichtung 1 in eine Arbeitsposition bewegt werden. Die Arbeitsposition ist in Figur 1 anhand der mit dem 6 bezeichneten gestrichelten Linie verdeutlicht.

Die Antriebsvorrichtung 4 umfasst ein Arretierelement 7 und ein Gegenelement 8. Der Werkzeugkopf 23 mit den Werkzeugaufnahmen 2 ist mit dem Gegenelement 8 verbunden. Das Arretierelement 7 und das Gegenelement 8 wirken derart mechanisch zusammen, dass die insgesamt vier Werkzeugaufnahmen 2 am Werkzeugkopf 23 nacheinander in die Arbeitsposition 6 positioniert und dort mit dem Arretierelement 7 festgelegt werden können. Die Positionierung der Werkzeugaufnahmen 2 geschieht bei dem in den Figuren dargestellten Ausführungsbeispiel, indem das Gegenelement 8 in seine zum Beispiel in Figur 10a mit dem Bezugszeichen 9 gekennzeichnete Arretierstellung relativ zu dem Arretierelement 7 bewegt wird.

Das Arretierelement 7 wirkt während dieser Verstellung derart mit dem Gegenelement 8 mechanisch zusammen, dass eine lineare Verstellbewegung des Gegenelement 8 in seine Arretierstellung 9, die anhand des Pfeils 22 in den Figuren 9b und 10b veranschaulicht ist, eine Positionierbewegung des Gegenelements 8 in Richtung des Pfeiles 21 (Figuren 9a und 9b) bewirkt.

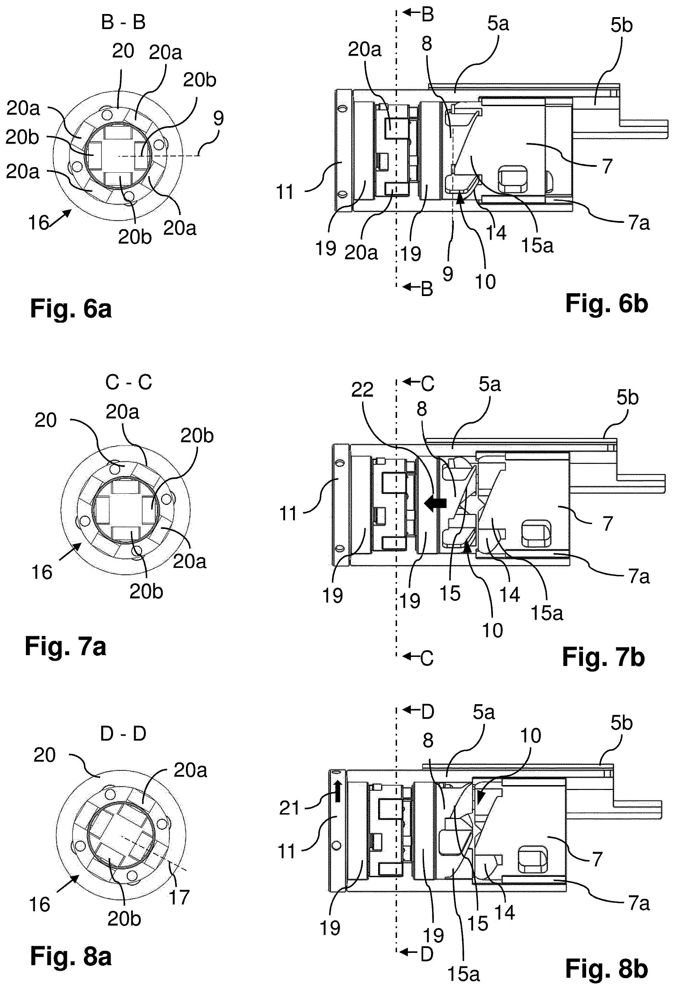

Dabei nimmt das Gegenelement 8 eine zu der Arbeitsposition 6 der Werkzeugaufnahmen 2 korrespondierende Stellung oder Relativposition ein. Diese korrespondierende Stellung oder Relativposition des Gegenelements 8 ist in den Figuren 6a und 6b sowie 10a und 10b zu erkennen.

Die mithilfe des Arretierelements 7 und des Gegenelements 8 auf die Werkzeugaufnahmen 2 an dem Werkzeugkopf 23 übertragbare Positionierbewegung 21 ist eine rotatorische Bewegung, die um eine Rotationsachse R des Werkzeugkopfes 23 und des Gegenelements 8 erfolgt. Die mit dem Gegenelement 8 ausführbare Verstellbewegung 22 ist eine lineare Bewegung, die in Richtung der Rotationsachse R des Werkzeugkopfes 23 und des Gegenelements 8 relativ zu dem axial fixierten Arretierelement 7 erfolgt.

Das Gegenelement 8 weist ein Klauenprofil 10 auf. Das Arretierelement 7 weist ein korrespondierendes Klauenprofil 10 auf. So kann bei einem Eingreifen des Gegenelement 8 in das Klauenprofil 10 des Arretierelements 7 eine Rotation des Gegenelements 8 bewirkt werden. Das Arretierelement 7 verbleibt dabei aufgrund seiner Lagerung 19 an dem Grundkörper 5a der Werkzeugwechselvorrichtung 1 in axialer Richtung ortsfest, ist also in Bezug auf die Rotationsachse R axial fixiert. Dies wird beim Vergleich der unterschiedlichen Lagen des Arretierelements 7, die in den Figuren 2 bis 10b und vor allem 11 bis 16 dargestellt sind, deutlich.

Die Werkzeugaufnahmen 2 sind über den Werkzeugkopf 23 derart mit dem Gegenelement 8 verbunden, dass eine Relativbewegung zwischen den Werkzeugaufnahmen 2 und dem Gegenelement 8 unterbunden ist. Die Werkzeugaufnahmen 2 sind über den Werkzeugkopf 23 drehfest mit dem Gegenelement 8 verbunden.

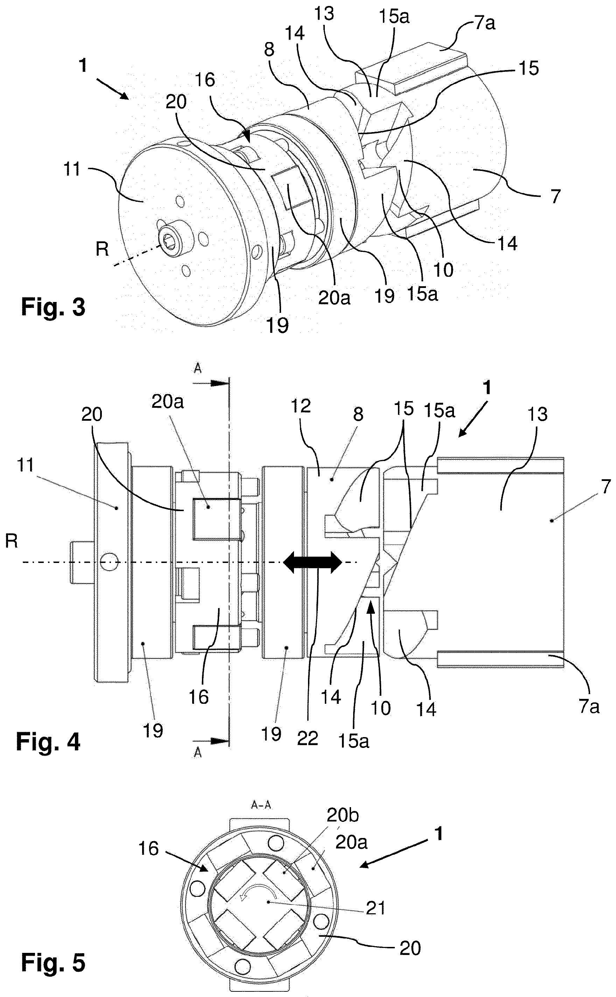

Insbesondere die Figuren 3 und 4 zeigen, dass das Gegenelement 8 an seinem dem Werkzeugkopf 23 in Gebrauchsstellung zugewandten Ende einen Trägerteller 11 umfasst. Über diesen Trägerteller 11 ist der Werkzeugkopf 23 in Gebrauchsstellung mit dem Gegenelement 8 befestigt. Über den Trägerteller 11 lässt sich ein Drehmoment, welches von dem Arretierelement 7 auf das Gegenelement 8 übertragen wird, auf den Werkzeugkopf 23 und die daran ausgebildeten Werkzeugaufnahmen 2 übertragen, um so die Werkzeugaufnahmen 2 nacheinander in ihre gewünschte Arbeitsposition 6 bewegen zu können. Der Trägerteller 11 dient einer komfortablen Befestigung des Werkzeugkopfes 23 an dem Gegenelement 8. Durch seine Festlegung an dem drehbar gelagerten Gegenelement 8 ist der Werkzeugkopf 23 der Werkzeugwechselvorrichtung 1 relativ zu dem Gestell 5 der Werkzeugmaschine 18 und auch relativ zu dem Grundkörper 5a der Werkzeugwechselvorrichtung 1 rotierbar.

Das Arretierelement 7 ist an dem Grundkörper 5a angeordnet. Das Gegenelement 8 ist auf der Seite mit dem bewegbaren Werkzeugkopf 23 angeordnet. Der Grundkörper 5a weist eine in den Figuren erkennbare, außenseitige Halterung 5b auf. Diese Halterung 5b dient zur Befestigung eines Glasmaßstabs (nicht dargestellt), mit dem eine Bewegung des Grundkörpers 5a relativ zu einem Gestell 5 der Werkzeugmaschine 18 überwacht werden kann.

Zur Befestigung des Grundkörpers 5a an einem entsprechenden Gegenpart der Werkzeugmaschine 18 dient ein umlaufender Flansch 5c.

Das Gegenelement 8 ist ein Gegenklauenelement 12, an dem eines der bereits zuvor erwähnten Klauenprofile 10 ausgebildet ist. Das Arretierelement 7 ist als in Bezug auf die Rotationsachse R und relativ zu dem Gegenelement 8 axial fixiertes Klauenelement 13 ausgebildet, das seinerseits das weitere, bereits zuvor erwähnte Klauenprofil 10 aufweist und zudem relativ zu dem Grundkörper 5a drehfest ist. Das als Klauenelement 13 ausgebildete Arretierelement 7 ähnelt in seiner Funktion einer axial fixierten Klauenbacke, die in Bezug auf die Rotationsachse R während des Wechselvorgangs axial nicht verschoben wird, während das als Gegenklauenelement 12 ausgebildete Gegenelement 8 einer axial verschieblichen Klauenmuffe ähnelt. Somit wird in diesem Ausführungsbeispiel das Gegenelement 8 während des Wechselvorgangs relativ zu dem zumindest während des Wechselvorgangs statischen Arretierelement 7 verschoben.

Das Arretierelement 7 und das Gegenelement 8 weisen an den Klauenflanken 15 ihrer Klauenprofile 10 zueinander passende Eingriffsflächen 14 auf. Die Eingriffsflächen 14 und die Klauenflanken 15 sind dabei schräg zur Rotationsachse R ausgerichtet. Über die Schrägstellung der Eingriffsflächen 14 kann eine Antriebskraft des Gegenelements 8 umgelenkt und die axiale Verstellbewegung 22 des Gegenelements 8 in die rotatorische Positionierbewegung 21 des Gegenelements 8 umgewandelt werden. Durch ihre Schrägstellung geben die Eingriffsflächen 14 und die Klauenflanken 15 die Drehrichtung der Positionierbewegung 21 vor.

Sowohl das Arretierelement 7 als auch das Gegenelement 8 weisen insgesamt jeweils vier Klauenvorsprünge 15a mit Klauenflanken 15 auf. Die Klauenvorsprünge 15a und Klauenflanken 15 sind um 90 Grad zueinander versetzt um die Rotationsachse R des Gegenelements 8 angeordnet. So kann das Arretierelement 7 das Gegenelement 8 in vier unterschiedliche Positionen bewegen und dort festlegen. Die Anordnung der Klauenvorsprünge 15a und Klauenflanken 15 entspricht dabei der Anordnung der Werkzeugaufnahmen 2. Zudem stimmt die Anzahl der an dem Arretierelement 7 vorgesehenen schrägen Klauenflanken 15 mit der Anzahl der an dem Gegenelement 8 vorgesehenen Anzahl an schrägen Klauenflanken 15 und auch mit der Anzahl der Werkzeugaufnahmen 2 überein. Zudem sind vier Klauenvorsprünge 15a an dem Arretierelement 7 und vier (Gegen-)Klauenvorsprünge 15a an dem Gegenelement 8 ausgebildet.

Die Werkzeugwechselvorrichtung 1 weist ferner eine Stellvorrichtung 16 auf. Diese Stellvorrichtung 16 dient dazu, das Gegenelement 8, wenn es von dem Arretierelement 7 freigegeben ist, automatisch weiterzubewegen. Dies mit dem Ziel, einen erneuten Eingriff des Arretierelements 7 an dem Gegenelement 8 zur Positionierung einer nächsten Werkzeugaufnahme 2 in die Arbeitsposition 6 und schließlich zur Arretierung des Gegenelements 8 und der positionierten Werkzeugaufnahme 2 zu ermöglichen.

Zu diesem Zweck ist die Stellvorrichtung 16 zur Erzeugung einer Stellkraft eingerichtet, die über das Gegenelement 8 auf den Werkzeugkopf 23 und die Werkzeugaufnahmen 2 übertragen werden kann. Die Stellkraft wird dazu genutzt, jede der vier Werkzeugaufnahmen 2 und insbesondere das Gegenelement 8 bei aus der Arretierstellung 9 bewegtem Gegenelement 8 automatisch aus der Arbeitsposition 6 in eine Zwischenposition zu bewegen. In dieser Zwischenposition ist das Gegenelement 8 in einer Eingriffsposition 17 relativ zu dem Arretierelement 7 angeordnet.

Die Eingriffsposition 17 ist anhand der in Figur 8a gestrichelt dargestellten Linie veranschaulicht. In dieser Eingriffsposition 17 kann das Gegenelement 8 durch eine axiale Verstellung, wie es in den Figuren 9a und 9b zu erkennen ist, erneut in Eingriff mit dem Arretierelement 7 gebracht werden, um die Positionierung einer nächsten der Werkzeugaufnahmen 2 in die Arbeitsposition 6 vorzunehmen (vgl. Fig. 6a und 6b sowie 10a und Fig. 10b).

Die Größe der von der Stellvorrichtung 16 aufgebrachten Stellkraft hängt dabei von einer Relativposition des Gegenelements 8 zu dem Arretierelement 7 ab. So nimmt die Stellkraft in einer zu der Arbeitsposition 6 korrespondierenden Relativposition des Gegenelements 8 zu dem Arretierelement 7, also dann, wenn das Gegenelement 8 durch das Arretierelement 7 fixiert ist (Figuren 6a und 6b sowie 10a und 10b), einen maximalen Wert an. Auf diese Weise kann sichergestellt werden, dass die Stellkraft, die zur Weiterbewegung der Werkzeugaufnahmen 2 und letztendlich auch des Gegenelements 8 in Richtung der mit dem Pfeil 21 bezeichneten Positionierbewegung der Werkzeugaufnahmen 2 wirkt, ausreicht, um das Gegenelement 8 zusammen mit den Werkzeugaufnahmen 2 nach Freigabe durch das Arretierelement 7 in die Eingriffsposition 17 weiterzubewegen.

Die zuvor erwähnte Stellkraft wirkt in aufeinanderfolgenden Relativpositionen des Gegenelements 8 zu dem Arretierelement 7 abwechselnd in Richtung und entgegen der Richtung der Positionierbewegung 21 der Werkzeugaufnahmen 2 und nimmt in der Eingriffsposition 17 den Wert Null an. Dies hat die Folge, dass das von dem Arretierelement 7 freigegebene Gegenelement 8 durch die Stellkraft der Stellvorrichtung 16 eine stabile Zwischenposition einnimmt. In Figur 8a sind das Gegenelement 8 und die Stellvorrichtung 16 in einer solchen Zwischenposition zwischen zwei aufeinanderfolgenden Relativpositionen dargestellt. Diese Zwischenposition entspricht dabei der bereits zuvor erwähnten Eingriffsposition 17.

In der Eingriffsposition 17 bringt die Stellvorrichtung 16 eine Haltekraft auf, mit der das Gegenelement 8 in seiner Eingriffsposition 17 für einen erneuten Eingriff des Arretierelements 7 gehalten wird. Egal in welche Richtung das Gegenelement 8 aus dieser Eingriffsposition 17 bewegt wird, bringt die Stellvorrichtung 16 automatisch eine in entgegengesetzter Richtung und in Richtung der Eingriffsposition 17 wirkende Stellkraft auf.

Die Stellvorrichtung 16 ist zwischen dem Grundkörper 5a der Werkzeugwechselvorrichtung 1 und dem relativ zu diesem rotierbaren Gegenelement 8 ausgebildet. Die Stellvorrichtung 16 ist eine magnetische Stellvorrichtung und weist einen Haltering 20 mit vier gleichmäßig um die Rotationsachse R des Gegenelements 8 verteilt angeordneten Magneten 20a auf. Über zwei Lager 19 ist das Gegenelement 8 drehbar in dem Grundkörper 5a der Werkzeugwechselvorrichtung 1 gelagert. Der Grundkörper 5a der Werkzeugwechselvorrichtung 1 kann daher auch als Gehäuse bezeichnet werden.

Der Haltering 20 mit den Magneten 20a umschließt das in Gebrauchsstellung befindliche Gegenelement 8 außenseitig und ist an dem Grundkörper 5a der Werkzeugwechselvorrichtung 1 festgelegt. An dem Gegenelement 8 sind gleichmäßig verteilt um die Rotationsachse R des Gegenelements 8 vier Gegenmagnete 20b angeordnet, die den Magneten 20a an dem Haltering 20 zugeordnet und ebenfalls Teil der magnetischen Stellvorrichtung 16 sind. Die Magnete 20a und die Gegenmagnete 20b sind hinsichtlich ihrer Polung so angeordnet, dass sie sich in der in Figur 8a dargestellten Eingriffsposition 17 des Gegenelements 8 zu dem Arretierelements 7 gegenseitig anziehen, also für eine stabile Lage des Gegenelements 8 in dieser Eingriffsposition 17 sorgen. In der Eingriffsposition 17 bauen die Magnete 20a und die Gegenmagnete 20b aufgrund ihrer gegenseitigen Anziehung und Polung eine radial wirkende Halterkraft auf.

Werden die Magnete 20a und Gegenmagnete 20b aus der in Figur 8 dargestellten Relativposition zueinander verschoben, indem das Gegenelement 8 relativ zu dem feststehenden Haltering 20 gedreht wird, bauen die Magnete 20a und Gegenmagnete 20b die in Richtung der Eingriffsposition 17 wirkende Stellkraft auf. Diese Stellkraft hat zumindest eine tangentiale Komponente und muss von dem Gegenelement 8 zur Positionierung des Gegenelements 8 durch seine axiale Zustellung zu dem Arretierelement 7 überwunden werden.

Die von den Magneten 20a und Gegenmagneten 20b aufgebrachte Stellkraft ist kleiner als die von dem Gegenelement 8 aufgebrachte Kraft, die über die Klauenflanken 15 des klauenartigen Arretierelements 7 und des klauenartigen Gegenelements 8 in eine Positionierkraft umgewandelt wird. Somit kann die Stellkraft der Stellvorrichtung 16 mithilfe des Gegenelements 8 überwunden und das Gegenelement 8 weiter gedreht werden, um eine nächste Werkzeugaufnahme 2 in die Arbeitsposition 6 zu verstellen. Das Gegenelement 8 kann somit als Drehschieber bezeichnet werden, mit dem eine axiale Stellbewegung des Gegenelements 8 in eine rotatorische Positionierbewegung 21 des Gegenelements 8 umgewandelt werden kann.

Den vier Werkzeugaufnahmen 2 an dem Werkzeugkopf 23 sind jeweils ein Magnet 20a und ein Gegenmagnet 20b zugeordnet, sodass die Stellvorrichtung 16 insgesamt vier Magnete 20a und vier Magnete 20b aufweist, die jeweils um 90 Grad zueinander versetzt um die Rotationsachse R des Gegenelements 8 verteilt sind.

Die Antriebsvorrichtung 4 umfasst einen Antrieb zur axialen Verstellung des Arretierelements 7 auf. Dieser Antrieb ist Teil der Antriebsvorrichtung 4 der Werkzeugmaschine 18 und ist als elektromagnetische Antriebsvorrichtung 4, mit der Hubbewegungen in hohen Frequenzen ausgeführt werden können.

Somit weist die Werkzeugmaschine 18 eine Antriebsvorrichtung 4 auf, die zur Erzeugung eines Werkzeugvorschubs und der Verstellbewegung 22 zwischen dem Arretierelement 7 und dem Gegenelement 8 eingerichtet ist. Eine separate Antriebsvorrichtung für die Verstellbewegung zum Werkzeugwechsel ist daher nicht notwendig.

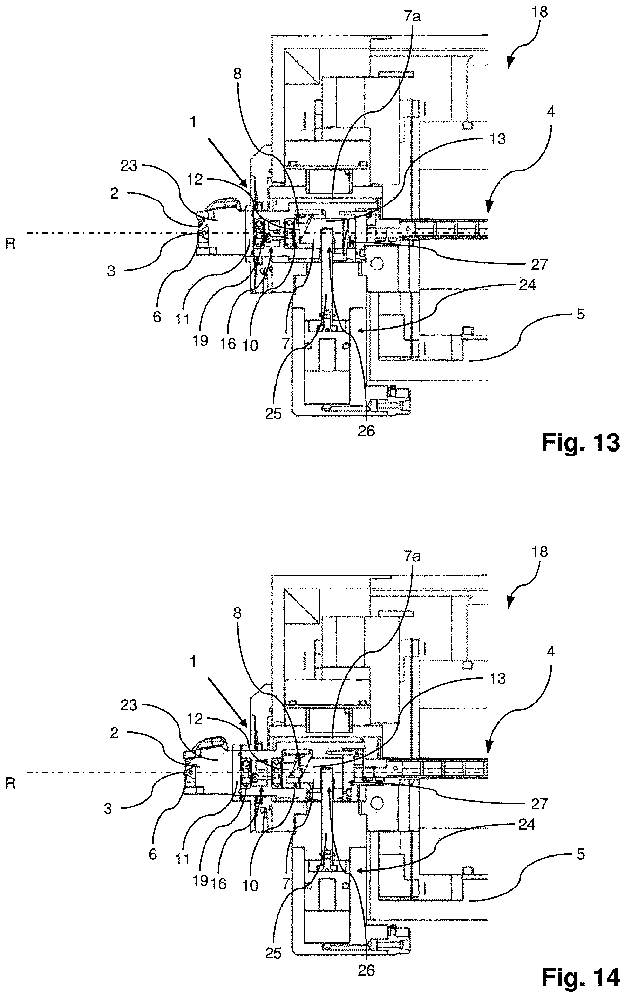

Die Werkzeugmaschine 18 umfasst ferner eine Arretiervorrichtung 24 mit einem Arretierstößel 25. Mithilfe der Arretiervorrichtung 24 und des Arretierstößels 25 kann das Arretierelement 7 der Werkzeugwechselvorrichtung 1 zumindest während eines Werkzeugwechsels relativ zu dem Gestell 5 der Werkzeugmaschine 18 fixiert werden. Dazu wird der Arretierstößel 25 in eine entsprechende Ausnehmung 26 an dem Arretierelement 7 eingeschoben. In dieser zum Beispiel in Fig. 13 dargestellten Position hält der Arretierstößel 25 das Arretierelement 7 fest und sorgt dafür, dass bei einer entsprechenden Vorschubbewegung der Antriebsvorrichtung 4 der Werkzeugmaschine 18 das Gegenelement 8 von dem Arretierelement 7 gelöst wird, um den Werkzeugwechsel, wie er zuvor ausführlich beschrieben wurde, durchzuführen.

Um bei einer hochfrequent oszillierenden Vorschubbewegung der Antriebsvorrichtung 4, ein ungewolltes Lösen des Gegenelements 8 von dem Arretierelement 7 zu verhindern, ist eine Druckfeder 27 vorgesehen, die das Arretierelement 7 in seiner Arretierstellung an dem Gegenelement 8 hält.

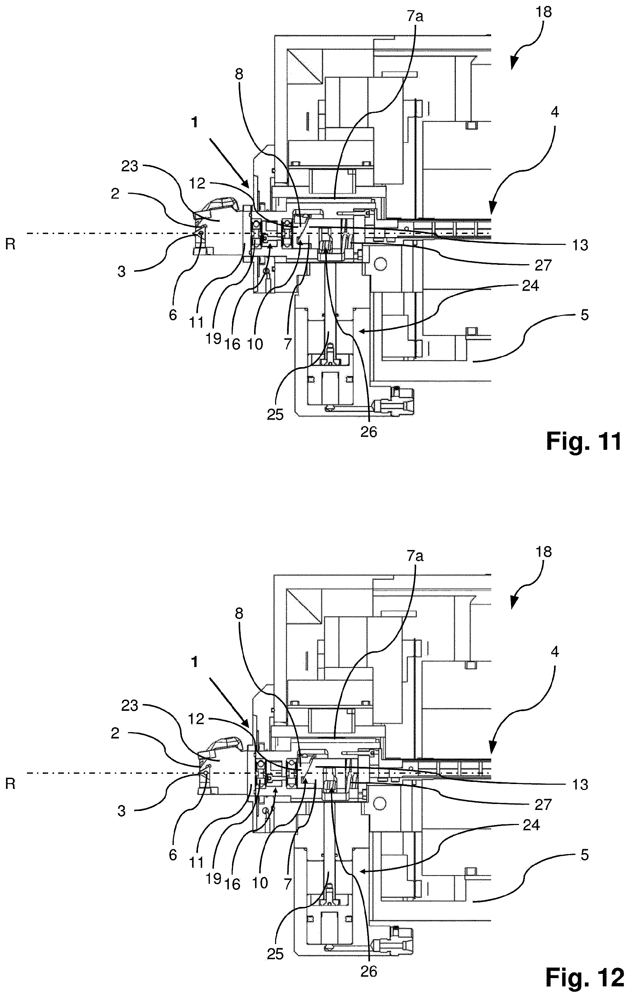

Fig. 11 zeigt die Werkzeugmaschine 18 im Betriebsmodus. Im Betriebsmodus ist der Arretierstößel 25 ausgerückt und das Arretierelement 7 durch die Antriebsvorrichtung 4 der Werkzeugmaschine 18 frei beweglich. Im Betriebsmodus dient die Antriebsvorrichtung 4 als Vorschubantrieb für den Werkzeugkopf 23 mit den daran angeordneten Werkzeugen 3.

In Fig. 12 ist der Werkzeugkopf 23 im Vergleich zu Fig. 11 zurückgezogen. Nun ist das Arretierelement 7 so relativ zu der Arretiervorrichtung 25 angeordnet, dass der Arretierstößel 25 in die Ausnehmung 26 an dem Arretierelement 7 eingeschoben werden kann. Der Arretierstößel 25 wird dazu pneumatisch und/oder hydraulisch bewegt.

In Fig. 13 ist der Arretierstößel 25 in die Ausnehmung 26 eingefahren. Dadurch wird das Arretierelement 7 relativ zu dem Arretierstößel 25 und dem Gestell 5 der Werkzeugmaschine 18 festgelegt. Die Werkzeugmaschine 18 befindet sich nun im Werkzeugwechselmodus. Die Antriebsvorrichtung 4 der Werkzeugmaschine 18 dient nun als Werkzeugwechselantrieb.

In Fig. 14 ist der Werkzeugkopf 23 mithilfe der Antriebsvorrichtung 4 nach vorne verschoben. Da das Arretierelement 7 durch den Arretierstößel 25 fixiert ist, werden das Gegenelement 8 und das Arretierelement 7 durch die lineare, von der Antriebsvorrichtung 4 verursachte Verstellbewegung 22 voneinander gelöst. Sobald das Gegenelement 8 vollständig von dem Arretierelement 7 gelöst ist, kann die Stellvorrichtung 16 das Gegenelement 8 relativ zu dem Arretierelement 7 in die Eingriffsposition 17 drehen und den Werkzeugwechsel einleiten.

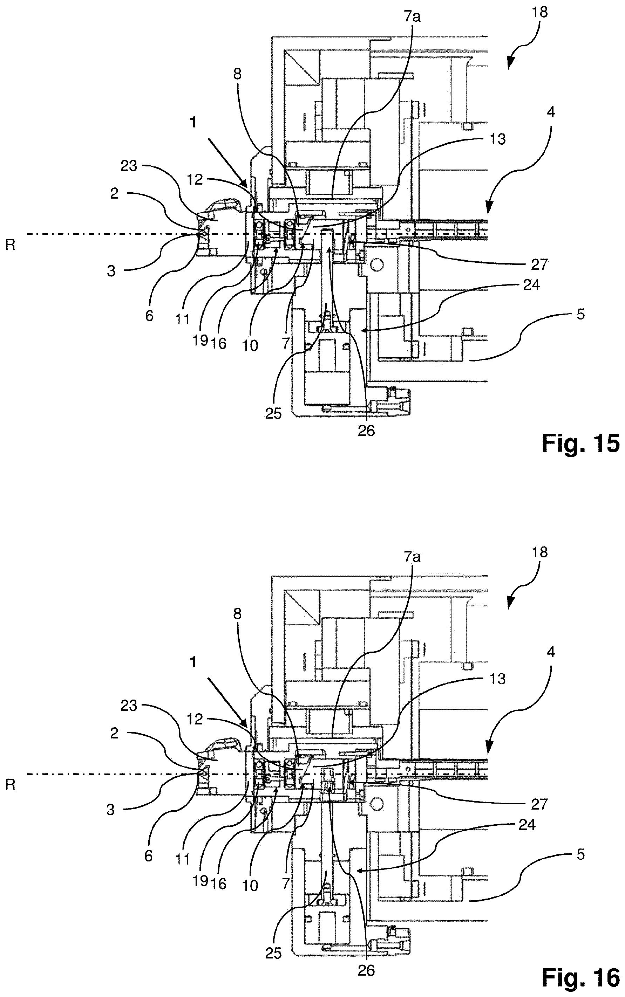

In Fig. 15 wurde der Werkzeugkopf 23 mit dem Gegenelement 8 von der Antriebsvorrichtung 4 wieder in seine hintere Position bewegt. Über die Eingriffsflächen 14 an den Klauenflanken 15 ist die lineare Rückstellbewegung des Werkzeugkopfes 23 sind die Positionierbewegung 21 umgewandelt und das Werkzeug 3 gewechselt worden.

In Fig. 16 ist der Arretierstößel 25 aus der Ausnehmung 26 des Arretierelements 7 zurückgezogen. Das Arretierelement 7 wird durch die Feder 27 wieder an das Gegenelement 8 gepresst. Das Gegenelement 8 wird durch das Arretierelement 7 arretiert. Der Werkzeugwechsel ist abgeschlossen. Die Werkzeugmaschine 18 befindet sich wieder im Betriebsmodus und die Antriebsvorrichtung 4 der Werkzeugmaschine 4 kann zur Erzeugung einer Vorschubbewegung verwendet werden.

Mit der zuvor beschriebenen Werkzeugwechselvorrichtung 1 lässt sich das nachfolgend beschriebene Verfahren zum Wechseln eines Werkzeugs 3 an der Werkzeugmaschine 18 durchführen.

Dabei wird eine das Werkzeug 3 tragende Werkzeugaufnahme 2 der Werkzeugwechselvorrichtung 1 in eine Arbeitsposition 6 positioniert, indem das Gegenelement 8 der Werkzeugwechselvorrichtung 1 in eine Arretierstellung 9 am dem Arretierelement 7 gebracht wird. Zur Positionierung der Werkzeugaufnahme 2 greift das Gegenelement 8 dabei in das Arretierelement 7 ein und wird relativ zu diesem bewegt.

Wie bereits zuvor ausgeführt, sind die Werkzeugaufnahmen 2 und das Gegenelement 8 drehfest miteinander verbunden. Allgemein könnte man auch sagen, dass die Werkzeugaufnahmen 2 und das Gegenelement 8 derart miteinander verbunden sind, dass eine Relativbewegung zwischen diesen ausgeschlossen ist. Sobald das Gegenelement 8 in seine Arretierstellung 9 an dem Arretierelement 7 gelangt, erreicht die Werkzeugaufnahme 2 die Arbeitsposition 6 und wird durch das Arretierelement 7 in dieser festgelegt. Sobald das Gegenelement 8 aus seiner Arretierstellung 9 (Figuren 6a und 6b, 10a und 10b sowie Fig. 14) wieder ausgerückt ist, wird die Werkzeugaufnahme 2 automatisch aus der Arbeitsposition 6 wegbewegt und das Gegenelement 8 in eine Eingriffsposition 17 verstellt. Dies geschieht mittels der bereits zuvor beschriebenen Stellvorrichtung 16. Die Werkzeugaufnahmen 2 bewegen sich bei der Positionierung entlang einer geschlossen umlaufenden Bahn. So ist ein voller Umlauf der Bahn notwendig, bevor eine Werkzeugaufnahme 2 erneut in dieselbe Arbeitsposition 6 gelangt.

Die Erfindung befasst sich mit Verbesserungen im Bereich von sogenannten Werkzeugwechselvorrichtungen 1, die an Werkzeugmaschinen 18 zum Einsatz kommen. Hierbei ist vorgesehen, eine Positionierung einer Werkzeugaufnahme 2 in ihre Arbeitsposition 6 mit Hilfe des Arretierelements 7 der Antriebsvorrichtung 4 der Werkzeugwechselvorrichtung 1 vorzunehmen. Dabei wird eine Verstellbewegung 22 des Arretierelements 7 in seine für die Benutzung des Werkzeugs 3 erforderliche Arretierstellung 9 zur Positionierung der Werkzeugaufnahme 2 in ihre Arbeitsposition 6 genutzt, indem die Verstellbewegung 22 des Arretierelements 7 in eine Positionierbewegung 21 der Werkzeugaufnahme 2 umgewandelt wird.

### Bezugszeichenliste

- 1: Werkzeugwechselvorrichtung
- 2: Werkzeugaufnahmen
- 3: Werkzeug
- 4: Antriebsvorrichtung
- 5: Gestell
- 5a: Grundkörper von 1
- 5b: Halterung
- 5c: Flansch
- 6: Arbeitsposition
- 7: Arretierelement
- 7a: Führungselement an 7
- 8: Gegenelement
- 9: Arretierstellung
- 10: Klauenprofil
- 11: Trägerteller
- 12: Gegenklauenelement
- 13: Klauenelement
- 14: Eingriffsfläche
- 15: Klauenflanke
- 15a: Klauenvorsprünge an 7 und 8
- 16: Stellvorrichtung
- 17: Eingriffsposition
- 18: Werkzeugmaschine
- 19: Lager
- 20: Haltering
- 20a: Magnet
- 20b: Gegenmagnet
- 21: Positionierbewegung
- 22: Verstellbewegung
- 23: Werkzeugkopf
- 24: Arretiervorrichtung
- 25: Arretierstößel
- 26: Ausnehmung
- 27: Druckfeder
- R: Rotationsachse von 8

## Patentansprüche

1. Werkzeugwechselvorrichtung (1) mit wenigstens zwei Werkzeugaufnahmen (2) zur Aufnahme jeweils eines Werkzeugs (3) und mit einer Antriebsvorrichtung (4), die wenigstens ein Arretierelement (7), wenigstens ein zumindest mittelbar mit den wenigstens zwei Werkzeugaufnahmen (2) verbundenes Gegenelement (8) und einen Antrieb zur Erzeugung einer linearen Verstellbewegung (22) umfasst, wobei mit der Antriebsvorrichtung (4) die Werkzeugaufnahmen (2) relativ zu einem Gestell (5) und/oder einem Grundkörper (5a) der Werkzeugwechselvorrichtung (1) mittels einer rotatorischen Positionierbewegung (21) des Gegenelements (8) um eine Rotationsachse R in eine Arbeitsposition (6) bewegbar sind, wobei das Arretierelement (7) und das Gegenelement (8) durch die vom Antrieb erzeugte lineare Verstellbewegung (22), die in Richtung der Rotationsachse R erfolgt, relativ zueinander verstellbar sind und wobei das Gegenelement (8) und das Arretierelement (7) derart zusammenwirken, dass die lineare Verstellbewegung (22) in die rotatorische Positionierbewegung (21) umgewandelt wird, sodass die Werkzeugaufnahmen (2) durch die lineare relative Verstellbewegung (22) zwischen dem Arretierelement (7) und dem Gegenelement (8) in die Arbeitsposition (6) positioniert und dort arretiert werden.

2. Werkzeugwechselvorrichtung (1) nach Anspruch 1, **dadurch gekennzeichnet, dass** das Arretierelement (7) und das Gegenelement (8) derart, vorzugsweise mechanisch, zusammenwirken, dass eine relativ zu dem Gegenelement (8) ausgeführte Verstellbewegung (22) des Arretierelements (7) in eine Arretierstellung (9) und/oder dass eine relativ zu dem Arretierelement (7) ausgeführte Verstellbewegung (22) des Gegenelements (8) in eine Arretierstellung (9) an dem Arretierelement (7) in die Positionierbewegung (21) des Gegenelements (8) umgewandelt werden, durch die die Werkzeugaufnahmen (2) in die Arbeitsposition (6) positionierbar sind.

3. Werkzeugwechselvorrichtung (1) nach Anspruch 1 oder 2, **dadurch gekennzeichnet, dass** die Positionierbewegung (21) des Gegenelements (8) eine rotatorische Bewegung um eine Rotationsachse des Werkzeugkopfes (23) ist, vorzugsweise wobei die Werkzeugaufnahmen (2) entlang einer um die Rotationsachse (R) geschlossenen Bahn umlaufen.

4. Werkzeugwechselvorrichtung (1) nach einem der vorhergehenden Ansprüche, **dadurch gekennzeichnet, dass** das wenigstens eine Gegenelement (8) ein zu dem wenigstens einen Arretierelement (7) korrespondierend ausgebildetes Zahnprofil und/oder Klauenprofil (10) aufweist, vorzugsweise wobei das Arretierelement (7) und das Gegenelement (8) korrespondierende Zahnprofile und/oder Klauenprofile (10) aufweisen.

5. Werkzeugwechselvorrichtung (1) nach einem der vorhergehenden Ansprüche, **dadurch gekennzeichnet, dass** die Werkzeugaufnahmen (2) derart mit dem Gegenelement (8) verbunden sind, dass eine Relativbewegung zwischen den Werkzeugaufnahmen (2) und dem Gegenelement (8) unterbunden ist, insbesondere wobei die Werkzeugaufnahmen (2) drehfest mit dem Gegenelement (8) verbunden sind.

6. Werkzeugwechselvorrichtung (1) nach einem der vorhergehenden Ansprüche, **dadurch gekennzeichnet, dass** die Werkzeugwechselvorrichtung (1) einen Werkzeugkopf (23) aufweist, an dem die wenigstens zwei Werkzeugaufnahmen (2) angeordnet oder ausgebildet sind und der relativ zu dem Gestell (5) und/oder zu dem Grundkörper (5a) der Werkzeugwechselvorrichtung (1) bewegbar, insbesondere rotierbar, ist.

7. Werkzeugwechselvorrichtung (1) nach einem der vorhergehenden Ansprüche, **dadurch gekennzeichnet, dass** das Arretierelement (7) an dem Gestell (5) und/oder an dem Grundkörper (5a) und das Gegenelement (8) an einem oder dem bewegbaren Werkzeugkopf (23) angeordnet sind oder dass das Arretierelement (7) an einem oder dem bewegbaren Werkzeugkopf (23) und das Gegenelement (8) an dem Gestell (5) angeordnet sind.

8. Werkzeugwechselvorrichtung (1) nach einem der vorhergehenden Ansprüche, **dadurch gekennzeichnet, dass** das Arretierelement (7) in Bezug auf das Gegenelement (8) als axial fixiertes Klauenelement (13) und das Gegenelement (8) als drehbares, in Bezug auf seine Rotationsachse (R) und/oder auf das Gegenelement (8) axial verschiebliches Gegenklauenelement (12) ausgebildet sind und jeweils wenigstens eine zu der Rotationsachse (R) des Gegenelements (8) schrägstehende Klauenflanke (15) aufweisen, wobei die Klauenflanken (15) korrespondierend zueinander ausgebildet sind, sodass die Verstellbewegung (22) über die Klauenflanken (15) in eine rotatorische Positionierbewegung (21) des Gegenelements (8) übertragbar ist.

9. Werkzeugwechselvorrichtung (1) nach einem der vorhergehenden Ansprüche, **dadurch gekennzeichnet, dass** die Werkzeugwechselvorrichtung (1) eine Stellvorrichtung (16) aufweist, mit der eine Stellkraft, zumindest mittelbar, auf die Werkzeugaufnahmen (2), insbesondere über das Gegenelement (8), übertragbar ist, wobei das nicht-arretierte Gegenelement (8) zusammen mit den Werkzeugaufnahmen (2) mithilfe der Stellkraft automatisch aus der Arbeitsposition (6) in eine Eingriffsposition (17) positionierbar oder weiterbewegbar ist, in der das Arretierelement (7) erneut in Eingriff mit dem Gegenelement (8) oder umgekehrt bringbar ist.

10. Werkzeugwechselvorrichtung (1) nach Anspruch 9, **dadurch gekennzeichnet, dass** eine Größe der Stellkraft von einer Relativposition des Arretierelements (7) und des Gegenelements (8) zueinander abhängt, vorzugsweise wobei die Stellkraft bei in Arretierstellung befindlichem Arretierelement (7) in Richtung einer oder der Positionierbewegung (21) der Werkzeugaufnahmen (2) wirkt, besonders bevorzugt wobei die Stellkraft bei in Arretierstellung befindlichem Arretierelement (7) ein Maximum annimmt.

11. Werkzeugwechselvorrichtung (1) nach Anspruch 9 oder 10, **dadurch gekennzeichnet, dass** die Stellkraft bei in Eingriffsposition (17) befindlichem Gegenelement (8) ein Minimum einnimmt, vorzugsweise Null ist, und ansonsten in Richtung oder entgegen der Richtung einer Positionierbewegung (21) der Werkzeugaufnahmen (2) wirkt, vorzugsweise wobei eine auf das Gegenelement (8) wirkende, insbesondere radiale, Haltekraft der Stellvorrichtung (16) bei in Eingriffsposition (17) befindlichem Gegenelement (8) ein Maximum annimmt.

12. Werkzeugwechselvorrichtung (1) nach einem der Ansprüche 9 bis 11, **dadurch gekennzeichnet, dass** die Stellvorrichtung (16) zwischen dem Gestell (5) oder dem Grundkörper (5a) der Werkzeugwechselvorrichtung (1) und dem Gegenelement (8) angeordnet ist und/oder als magnetische Stellvorrichtung (16) ausgebildet ist, insbesondere wobei die Stellvorrichtung (16) zur Erzeugung der Stellkraft und/oder einer Haltekraft wenigstens einen relativ zu dem Gegenelement (8) feststehenden Magneten (20a) und wenigstens einen an dem Gegenelement (8) angeordneten Gegenmagneten (20b) umfasst, mit denen das Gegenelement (8) in eine Eingriffsposition (17) bringbar ist.

13. Werkzeugwechselvorrichtung (1) nach einem der Ansprüche 1 bis 12, **dadurch gekennzeichnet, dass** die Antriebsvorrichtung (4) einen, vorzugsweise elektrischen und/oder elektromagnetischen und/oder pneumatischen und/oder hydraulischen, Antrieb zur Erzeugung der Verstellbewegung (22) aufweist, insbesondere wobei die Antriebsvorrichtung (4) eine Antriebsvorrichtung einer Werkzeugmaschine (18) zur Erzeugung eines Werkzeugvorschubs ist.

14. Werkzeugmaschine (18) mit einer Werkzeugwechselvorrichtung (1) nach einem der Ansprüche 1 bis 13.

15. Werkzeugmaschine (18) nach Anspruch 14, **dadurch gekennzeichnet, dass** die Werkzeugmaschine (18) eine Antriebsvorrichtung (4) aufweist, die zur Erzeugung eines vorzugsweise mit einer Werkstückrotation synchronisierten Werkzeugvorschubs und der vorzugsweise zum Werkzeugvorschub parallelen Verstellbewegung (22) zwischen dem Arretierelement (7) und dem Gegenelement (8) eingerichtet ist, und/oder dass die Werkzeugmaschine (18) eine Arretiervorrichtung (24), insbesondere mit einem Arretierstößel (25), aufweist, mittels derer das Arretierelement (7) der Werkzeugwechselvorrichtung (1) zumindest während eines Werkzeugwechsels relativ zu einem Gestell (5) der Werkzeugmaschine (18) fixierbar ist.

16. Verfahren zum Wechseln eines Werkzeugs (3) unter Verwendung einer Werkzeugwechselvorrichtung (1)
- mit wenigstens zwei Werkzeugaufnahmen (2) zur Aufnahme jeweils eines Werkzeugs (3) und mit einer Antriebsvorrichtung (4), die wenigstens ein Arretierelement (7), wenigstens ein zumindest mittelbar mit den wenigstens zwei Werkzeugaufnahmen (2) verbundenes Gegenelement (8) und einen Antrieb zur Erzeugung einer linearen Verstellbewegung (22) umfasst, **dadurch gekennzeichnet,**
- **dass** mit der Antriebsvorrichtung (4) die Werkzeugaufnahmen (2) relativ zu einem Gestell (5) und/oder einem Grundkörper (5a) der Werkzeugwechselvorrichtung (1) mittels einer rotatorischen Positionierbewegung (21) des Gegenelements (8) um eine Rotationsachse R in eine Arbeitsposition (6) bewegt werden,
- wobei hierzu das Arretierelement (7) und das Gegenelement (8) durch die vom Antrieb erzeugte lineare Verstellbewegung (22), die in Richtung der Rotationsachse R erfolgt, relativ zueinander verstellt werden, und
- wobei das Gegenelement (8) und das Arretierelement (7) derart zusammenwirken, dass die lineare Verstellbewegung (22) in die rotatorische Positionierbewegung (21) umgewandelt wird,
sodass eine der Werkzeugaufnahmen (2), die das Werkzeug (3) trägt, durch die relative lineare Verstellbewegung (22) zwischen dem Arretierelement (7) und dem Gegenelement (8) in eine Arbeitsposition (6) positioniert wird.

17. Verfahren nach Anspruch 16, **dadurch gekennzeichnet, dass** das Arretierelement (7) zur Positionierung der Werkzeugaufnahme (2) in eine das Gegenelement (8) arretierende Arretierstellung (9) bewegt wird, und/oder dass das Gegenelement (8) zur Positionierung der Werkzeugaufnahme (2) in eine Arretierstellung (9) bewegt wird, wobei die Verstellbewegung (22) in eine Positionierbewegung (21) des Gegenelements (8) umgewandelt wird, vorzugsweise wobei die Werkzeugaufnahme (2) in der Arbeitsposition (6) festgelegt wird, wenn das Arretierelement (7) und/oder das Gegenelement (8) seine Arretierstellung (9) erreicht.

18. Verfahren nach Anspruch 16 oder 17, **dadurch gekennzeichnet, dass** die Werkzeugaufnahme (2), insbesondere das Gegenelement (8), aus der Arbeitsposition (6) in eine Zwischenposition oder Eingriffsposition (17), vorzugsweise automatisch, verstellt wird, nachdem das Arretierelement (7) oder das Gegenelement (8) aus der Arretierstellung (9) ausgerückt ist.

19. Verfahren nach einem der Ansprüche 16 bis 18, **dadurch gekennzeichnet, dass** die Werkzeugaufnahme (2), insbesondere das Gegenelement (8), mittels einer Stellvorrichtung (16), vorzugsweise einer Stellvorrichtung (16) wie sie in einem der Ansprüche 9 bis 12 beschrieben ist, aus der Arbeitsposition (6) in eine Zwischenposition oder Eingriffsposition (17) verstellt wird.

20. Verfahren nach einem der Ansprüche 16 bis 19, **dadurch gekennzeichnet, dass** vor und/oder nach dem Wechseln des Werkzeugs mit der Antriebsvorrichtung ein vorzugsweise zu der Verstellbewegung paralleler und/oder mit einer Werkstückrotation synchronisierter Werkzeugvorschub während einer Spanbearbeitung ausgeführt wird.

## Claims

1. Tool changing device (1) having at least two tool holders (2) for holding one tool (3) each and having a drive device (4) which comprises at least one locking element (7), at least one counter element (8) connected at least indirectly to the at least two tool holders (2), and a drive for producing a linear adjustment movement (22), wherein the tool holders (2) are movable relative to a frame (5) and/or a base body (5a) of the tool changing device (1) by means of a rotary positioning movement (21) of the counter element (8) about a axis of rotation R into a working position (6), wherein the locking element (7) and the counter element (8) are adjustable relative to each other by the linear adjustment movement (22) generated by the drive, which takes place in the direction of the axis of rotation R, and wherein the counter element (8) and the locking element (7) interact in such a way that the linear adjustment movement (22) is converted into the rotary positioning movement (21), so that the tool holders (2) are positioned in the working position (6) by the linear relative adjustment movement (22) between the locking element (7) and the counter element (8) and are locked there.

2. Tool changing device (1) according to claim 1, **characterized in that** the locking element (7) and the counter element (8) interact, preferably mechanically, in such a way that an adjustment movement (22) of the locking element (7) relative to the counter element (8) is converted into a locking position (9) and/or **in that** an adjustment movement (22) of the counter element (8) relative to the locking element (7) into a locking position (9) on the locking element (7) is converted into the positioning movement (21) of the counter element (8), by means of which the tool holders (2) can be positioned in the working position (6).

3. Tool changing device (1) according to claim 1 or 2, **characterized in that** the positioning movement (21) of the counter element (8) is a rotary movement about a rotation axis of the tool head (23), preferably wherein the tool holders (2) rotate along a closed path about the axis of rotation (R).

4. Tool changing device (1) according to one of the preceding claims, **characterized in that** the at least one counter element (8) has a tooth profile and/or claw profile (10) designed to correspond to the at least one locking element (7), preferably wherein the locking element (7) and the counter element (8) have corresponding tooth profiles and/or claw profiles (10).

5. Tool changing device (1) according to one of the preceding claims, **characterized in that** the tool holders (2) are connected to the counter element (8) in such a way that a relative movement between the tool holders (2) and the counter element (8) is prevented, in particular wherein the tool holders (2) are connected to the counter element (8) in a rotationally fixed manner.

6. Tool changing device (1) according to one of the preceding claims, **characterized in that** the tool changing device (1) has a tool head (23) on which the at least two tool holders (2) are arranged or formed and which is movable, in particular rotatable, relative to the frame (5) and/or to the base body (5a) of the tool changing device (1).

7. Tool changing device (1) according to one of the preceding claims, **characterized in that** the locking element (7) is arranged on the frame (5) and/or on the base body (5a) and the counter element (8) is arranged on one or the movable tool head (23), or **in that** the locking element (7) is arranged on one or the movable tool head (23) and the counter element (8) is arranged on the frame (5).

8. Tool changing device (1) according to one of the preceding claims, **characterized in that** the locking element (7) is designed as an axially fixed claw element (13) relative to the counter element (8) and the counter element (8) is designed as a rotatable counter-claw element (12) that can be axially displaced relative to its axis of rotation (R) and/or relative to the counter element (8), and each has at least one claw flank (15) inclined relative to the axis of rotation (R) of the counter element (8), wherein the claw flanks (15) are designed to correspond to one another so that the adjustment movement (22) can be transmitted via the claw flanks (15) into a rotary positioning movement (21) of the counter element (8).

9. Tool changing device (1) according to one of the preceding claims, **characterized in that** the tool changing device (1) has an actuating device (16) by means of which an actuating force can be transmitted, at least indirectly, to the tool holders (2), in particular via the counter element (8), wherein the non-locked counter element (8) together with the tool holders (2) can be automatically positioned or moved further by means of the actuating force from the working position (6) into an engagement position (17) in which the locking element (7) can be brought back into engagement with the counter element (8) or vice versa.

10. Tool changing device (1) according to claim 9, **characterized in that** a magnitude of the actuating force depends on a relative position of the locking element (7) and the counter element (8) relative to each other, preferably wherein the actuating force acts in the direction of one or the positioning movement (21) of the tool holders (2) when the locking element (7) is in the locking position, and particularly preferably wherein the actuating force assumes a maximum value when the locking element (7) is in the locking position.

11. Tool changing device (1) according to claim 9 or 10, **characterized in that** the actuating force assumes a minimum, preferably zero, when the counter element (8) is in the engagement position (17), and otherwise acts in the direction or opposite to the direction of a positioning movement (21) of the tool holders (2), preferably wherein a holding force of the actuating device (16) acting on the counter element (8), in particular a radial holding force, assumes a maximum value when the counter element (8) is in the engagement position (17).

12. Tool changing device (1) according to one of claims 9 to 11, **characterized in that** the actuating device (16) is arranged between the frame (5) or the base body (5a) of the tool changing device (1) and the counter element (8) and/or is designed as a magnetic actuating device (16), in particular wherein the actuating device (16) for generating the actuating force and/or a holding force comprises at least one magnet (20a) fixed relative to the counter element (8) and at least one counter magnet (20b) arranged on the counter element (8), with which the counter element (8) can be brought into an engagement position (17).

13. Tool changing device (1) according to one of claims 1 to 12, **characterized in that** the drive device (4) has a drive, preferably electric and/or electromagnetic and/or pneumatic and/or hydraulic, for generating the adjustment movement (22), in particular wherein the drive device (4) is a drive device of a machine tool (18) for generating a tool feed.

14. Machine tool (18) having a tool changing device (1) according to one of claims 1 to 13.

15. Machine tool (18) according to claim 14, **characterized in that** the machine tool (18) has a drive device (4) which is designed to generate a tool feed, preferably synchronized with workpiece rotation, and the adjustment movement (22) between the locking element (7) and the counter element (8), preferably parallel to the tool feed, and/or **in that** the machine tool (18) has a locking device (24), in particular with a locking tappet (25), by means of which the locking element (7) of the tool changing device (1) can be fixed relative to a frame (5) of the machine tool (18) at least during a tool change.

16. Method for changing a tool (3) using a tool changing device (1)
- having at least two tool holders (2) for holding one tool (3) each and having a drive device (4) which comprises at least one locking element (7), at least one counter element (8) connected at least indirectly to the at least two tool holders (2), and a drive for generating a linear adjustment movement (22), **characterized in that**
- the drive device (4) is used to move the tool holders (2) relative to a frame (5) and/or a base body (5a) of the tool changing device (1) by means of a rotary positioning movement (21) of the counter element (8) about an axis of rotation R into a working position (6),
- wherein for this purpose the locking element (7) and the counter element (8) are displaced relative to each other by the linear adjustment movement (22) generated by the drive and performed in the direction of the axis of rotation R, and
- wherein the counter element (8) and the locking element (7) interact in such a way that the linear adjustment movement (22) is converted into the rotary positioning movement (21),
so that one of the tool holders (2) which carries the tool (3) is positioned in a working position (6) by the relative linear adjustment movement (22) between the locking element (7) and the counter element (8).

17. Method according to claim 16, **characterized in that** the locking element (7) is moved into a locking position (9) locking the counter element (8) in order to position the tool holder (2), and/or **in that** the counter element (8) is moved into a locking position (9) in order to position the tool holder (2), wherein the adjustment movement (22) is converted into a positioning movement (21) of the counter element (8), preferably wherein the tool holder (2) is fixed in the working position (6) when the locking element (7) and/or the counter element (8) reaches its locking position (9).

18. Method according to claim 16 or 17, **characterized in that** the tool holder (2), in particular the counter element (8), is moved from the working position (6) into an intermediate position or engagement position (17), preferably automatically, after the locking element (7) or the counter element (8) has been disengaged from the locking position (9).

19. Method according to one of claims 16 to 18, **characterized in that** the tool holder (2), in particular the counter element (8), is moved from the working position (6) into an intermediate position or engagement position (17) by means of an actuating device (16), preferably an actuating device (16) as described in one of claims 9 to 12.

20. Method according to one of claims 16 to 19, **characterized in that** before and/or after changing the tool with the drive device, a tool feed is performed during chip removal, preferably parallel to the adjustment movement and/or synchronized with a workpiece rotation.

## Revendications

1. Dispositif changeur d'outil (1) doté d'au moins deux logements d'outil (2) destinés à loger respectivement un outil (3) et d'un dispositif d'entraînement (4) qui comprend au moins un élément d'arrêt (7), au moins un contre-élément (8) raccordé au moins de façon indirecte aux au moins deux logements d'outil (2) et un entraînement destiné à produire un mouvement de déplacement (22) linéaire, les logements d'outil (2) pouvant, avec le dispositif d'entraînement (4), être déplacés jusqu'à une position de travail (6) par rapport à un châssis (5) et/ou à un corps de base (5a) du dispositif changeur d'outil (1) au moyen d'un mouvement de positionnement (21) rotatif du contre-élément (8) autour d'un axe de rotation R, l'élément d'arrêt (7) et le contre-élément (8) pouvant être déplacés l'un par rapport à l'autre par le mouvement de déplacement (22) linéaire, produit par l'entraînement, qui est effectué en direction de l'axe de rotation R, et le contre-élément (8) et l'élément d'arrêt (7) coopérant de telle sorte que le mouvement de déplacement (22) linéaire est converti en mouvement de positionnement (21) rotatif, de sorte que les logements d'outil (2) sont, par le mouvement de déplacement (22) relatif linéaire, positionnés entre l'élément d'arrêt (7) et le contre-élément (8) dans la position de travail (6) et y sont arrêtés.

2. Dispositif changeur d'outil (1) selon la revendication 1, **caractérisé en ce que** l'élément d'arrêt (7) et le contre-élément (8) coopèrent l'un avec l'autre, de préférence mécaniquement, de telle sorte qu'un mouvement de déplacement (22) de l'élément d'arrêt (7) jusqu'à une position d'arrêt (9) effectué par rapport au contre-élément (8) et/ou de telle sorte qu'un mouvement de déplacement (22) du contre-élément (8) effectué par rapport à l'élément d'arrêt (7) jusqu'à une position d'arrêt (9) sur l'élément d'arrêt (7) sont convertis en mouvement de positionnement (21) du contre-élément (8) par lequel les logements d'outil (2) peuvent être positionnés dans la position de travail (6).

3. Dispositif changeur d'outil (1) selon la revendication 1 ou 2, **caractérisé en ce que** le mouvement de positionnement (21) du contre-élément (8) est un mouvement rotatif autour d'un axe de rotation de la tête d'outil (23), les logements d'outil (2) tournant de préférence le long d'une trajectoire fermée autour de l'axe de rotation (R).

4. Dispositif changeur d'outil (1) selon l'une des revendications précédentes, **caractérisé en ce que** l'au moins un contre-élément (8) présente un profil de dents et/ou un profil de griffes (10) constitué de façon correspondante à l'au moins un élément d'arrêt (7), l'élément d'arrêt (7) et le contre-élément (8) présentant de préférence des profils de dents et/ou des profils de griffes (10) correspondants.

5. Dispositif changeur d'outil (1) selon l'une des revendications précédentes, **caractérisé en ce que** les logements d'outil (2) sont raccordés au contre-élément (8) de telle sorte qu'un mouvement relatif entre les logements d'outil (2) et le contre-élément (8) est empêché, les logements d'outil (2) étant en particulier raccordés, de façon bloquée en rotation, au contre-élément (8).

6. Dispositif changeur d'outil (1) selon l'une des revendications précédentes, **caractérisé en ce que** le dispositif changeur d'outil (1) présente une tête d'outil (23) sur laquelle sont disposés ou constitués les au moins deux logements d'outil (2) et qui peut être déplacée, en particulier mise en rotation, par rapport au châssis (5) et/ou au corps de base (5a) du dispositif changeur d'outil (1).

7. Dispositif changeur d'outil (1) selon l'une des revendications précédentes, **caractérisé en ce que** l'élément d'arrêt (7) est disposé sur le châssis (5) et/ou sur le corps de base (5a), et le contre-élément (8) est disposé sur une ou sur la tête d'outil (23) mobile, ou **en ce que** l'élément d'arrêt (7) est disposé sur une ou sur la tête d'outil (23) mobile, et le contre-élément (8) est disposé sur le châssis (5).

8. Dispositif changeur d'outil (1) selon l'une des revendications précédentes, **caractérisé en ce que**, relativement au contre-élément (8), l'élément d'arrêt (7) est constitué en tant qu'élément à griffes (13) fixé axialement, et le contre-élément (8) est constitué en tant que contre-élément à griffes (12) rotatif, déplaçable axialement relativement à son axe de rotation (R) et/ou au contre-élément (8), et **en ce que** l'élément d'arrêt (7) et le contre-élément (8) présentent respectivement au moins un flanc de griffes (15) oblique par rapport à l'axe de rotation (R) du contre-élément (8), les flancs de griffes (15) étant constitués de façon correspondante entre eux, de telle sorte que le mouvement de déplacement (22) peut, par le biais des flancs de griffes (15), être transposé en un mouvement de positionnement (21) rotatif du contre-élément (8).

9. Dispositif changeur d'outil (1) selon l'une des revendications précédentes, **caractérisé en ce que** le dispositif changeur d'outil (1) présente un dispositif de déplacement (16) avec lequel une force de déplacement peut, au moins de façon indirecte, être appliquée aux logements d'outil (2) en particulier par le biais du contre-élément (8), le contre-élément (8) non arrêté pouvant, conjointement avec les logements d'outil (2), à l'aide de la force de déplacement, être positionné ou déplacé davantage automatiquement à partir de la position de travail (6) jusqu'à une position d'enclenchement (17) dans laquelle l'élément d'arrêt (7) peut de nouveau être enclenché avec le contre-élément (8) ou inversement.

10. Dispositif changeur d'outil (1) selon la revendication 9, **caractérisé en ce qu'**une grandeur de la force de déplacement dépend d'une position relative de l'élément d'arrêt (7) et du contre-élément (8) l'un par rapport à l'autre, la force de déplacement agissant de préférence, quand l'élément d'arrêt (7) se trouve dans la position d'arrêt, en direction d'un ou du mouvement de positionnement (21) des logements d'outil (2), la force de déplacement adoptant, de façon particulièrement préférentielle, un maximum quand l'élément d'arrêt (7) se trouve dans la position d'arrêt.

11. Dispositif changeur d'outil (1) selon la revendication 9 ou 10, **caractérisé en ce que** la force de déplacement, quand le contre-élément (8) se trouve dans la position d'enclenchement (17), adopte un minimum, est de préférence nulle, et agit pour le reste dans la direction ou inversement à la direction d'un mouvement de positionnement (21) des logements d'outil (2), une force de retenue, en particulier radiale, du dispositif de déplacement (16) agissant sur le contre-élément (8) adoptant de préférence un maximum quand le contre-élément (8) se trouve dans la position d'enclenchement (17).

12. Dispositif changeur d'outil (1) selon l'une des revendications 9 à 11, **caractérisé en ce que** le dispositif de déplacement (16) est disposé entre le châssis (5) ou le corps de base (5a) du dispositif changeur d'outil (1) et le contre-élément (8) et/ou est constitué en tant que dispositif de déplacement (16) magnétique, le dispositif de déplacement (16) présentant de préférence, pour la production de la force de déplacement et/ou d'une force de retenue, au moins un aimant (20a) fixe par rapport au contre-élément (8) et au moins un contre-aimant (20b) disposé sur le contre-élément (8), avec lesquels le contre-élément (8) peut être amené dans une position d'enclenchement (17).

13. Dispositif changeur d'outil (1) selon l'une des revendications 1 à 12, **caractérisé en ce que** le dispositif d'entraînement (4) présente un entraînement, de préférence électrique et/ou électromagnétique et/ou pneumatique et/ou hydraulique, destiné à la production du mouvement de déplacement (22), le dispositif d'entraînement (4) étant en particulier un dispositif d'entraînement d'une machine-outil (18) pour la production d'une avance d'outil.

14. Machine-outil (18) dotée du dispositif changeur d'outil (1) selon l'une des revendications 1 à 13.

15. Machine-outil (18) selon la revendication 14, **caractérisée en ce que** la machine-outil (18) présente un dispositif d'entraînement (4) qui est agencé pour la production d'une avance d'outil, de préférence synchronisée avec une rotation de la pièce à usiner, et du mouvement de déplacement (22), de préférence parallèle à l'avance d'outil, entre l'élément d'arrêt (7) et le contre-élément (8), et/ou **en ce que** la machine-outil (18) présente un dispositif d'arrêt (24), en particulier doté d'un poussoir d'arrêt (25), au moyen duquel l'élément d'arrêt (7) du dispositif changeur d'outil (1) peut être fixé, au moins pendant un changement d'outil, par rapport à un châssis (5) de la machine-outil (18).

16. Procédé de changement d'un outil (3) avec utilisation d'un dispositif changeur d'outil (1)
- avec au moins deux logements d'outil (2) destinés à loger respectivement un outil (3) et avec un dispositif d'entraînement (4) qui comprend au moins un élément d'arrêt (7), au moins un contre-élément (8) raccordé, au moins de façon indirecte, aux au moins deux logements d'outil (2), et un entraînement destiné à la production d'un mouvement de déplacement (22) linéaire, **caractérisé en ce que**
- avec le dispositif d'entraînement (4), les logements d'outil (2) sont déplacés jusqu'à une position de travail (6) par rapport à un châssis (5) et/ou à un corps de base (5a) du dispositif changeur d'outil (1) au moyen d'un mouvement de positionnement (21) rotatif du contre-élément (8) autour d'un axe de rotation R,
- l'élément d'arrêt (7) et le contre-élément (8) étant pour cela déplacés l'un par rapport à l'autre par le mouvement de déplacement (22) linéaire, produit par l'entraînement, qui s'effectue en direction de l'axe de rotation R, et
- le contre-élément (8) et l'élément d'arrêt (7) coopérant de telle sorte que le mouvement de déplacement (22) linéaire est converti en mouvement de positionnement (21) rotatif,
de telle sorte qu'un des logements d'outil (2) qui porte l'outil (3) est positionné dans une position de travail (6) par le mouvement de déplacement (22) linéaire relatif entre l'élément d'arrêt (7) et le contre-élément (8).

17. Procédé selon la revendication 16, **caractérisé en ce que** l'élément d'arrêt (7) est, pour le positionnement du logement d'outil (2), déplacé jusqu'à une position d'arrêt (9) arrêtant le contre-élément (8), et/ou **en ce que**, pour le positionnement du logement d'outil (2), le contre-élément (8) est déplacé jusqu'à une position d'arrêt (9), le mouvement de déplacement (22) étant converti en un mouvement de positionnement (21) du contre-élément (8), le logement d'outil (2) étant de préférence immobilisé dans la position de travail (6) quand l'élément d'arrêt (7) et/ou le contre-élément (8) atteint sa position d'arrêt (9).

18. Procédé selon la revendication 16 ou 17, **caractérisé en ce que** le logement d'outil (2), en particulier le contre-élément (8), est déplacé, de préférence automatiquement, de la position de travail (6) jusqu'à une position intermédiaire ou position d'enclenchement (17) après que l'élément d'arrêt (7) ou le contre-élément (8) a été désaccouplé de la position d'arrêt (9).

19. Procédé selon l'une des revendications 16 à 18, **caractérisé en ce que** le logement d'outil (2), en particulier le contre-élément (8), est, au moyen d'un dispositif de déplacement (16), de préférence un dispositif de déplacement (16) tel qu'il est décrit dans l'une des revendications 9 à 12, déplacé de la position de travail (6) jusqu'à une position intermédiaire ou position d'enclenchement (17).

20. Procédé selon l'une des revendications 16 à 19, **caractérisé en ce que**, avant et/ou après le changement de l'outil, une avance d'outil, de préférence parallèle au mouvement de déplacement ou synchronisée avec une rotation de pièce, est effectuée avec le dispositif d'entraînement pendant un usinage par enlèvement de copeaux.
